# EUROPEAN PATENT APPLICATION

(11) **EP 3 078 953 A1**
(43) Date of publication of application: **12.10.2016**
(21) Application number: 14867826.1
(22) Date of filing: 25.11.2014
(51) Int. Cl.: G01K 11/12

(54) **TEMPERATURE INDICATOR AND CONTAINER WITH TEMPERATURE INDICATION**

(30) Priority: 03.12.2013 CN 201320788487 U
(71) Applicant: Leung, Hobun, Hong Kong (CN)
(72) Inventor: Leung, Hobun, Hong Kong (CN)
(74) Representative: dompatent von Kreisler Selting Werner - Partnerschaft von Patent- und Rechtsanwälten mbB
(86) International application number: PCT/CN2014/092137
(87) International publication number: WO 2015/081793

(57) **Abstract**

The present invention discloses a temperature indicator, including a temperature indicator body, wherein the body is provided with temperature induction zones so as to induce different temperature ranges and display differently. The present invention has changed the traditional liquid temperature measurement manner where the present thermochromic materials are coated on the indicator body made of paper or plastic to form the temperature induction zones, so as to produce the temperature indicator. The temperature induction zones may present different colors such as red, blue or green and wordings according to different temperature ranges induced by the temperature induction zones, so as to remind people of an approximate temperature range of the liquid. The present invention also discloses a container with temperature indication that enables people to know the approximate temperature range of liquid in the container via color changes that are visualized to naked eyes. The container is simple, convenient and applicable; moreover, the entire container is beautiful.

## Description

### TECHNICAL FIELD

The present invention relates to a temperature indicator, and more particularly, to a temperature indicator capable of indicating the temperature range of liquid in a container, so as to prompt according to different temperature ranges. The present invention also relates to a container with temperature indication.

### BACKGROUND

Although the traditional container for carrying liquids, for example, a cup, an infant bottle or a double-layer cup prevents users from scalding hands when touching the container carrying hot water, however the users are difficult to sense the approximate temperature of the water in the cup, and an accurate measurement to the actual temperature of the water in the cup will be required so that people will be able to know whether the temperature of the water in the cup is suitable for drinking. Particularly, it is vital to identify the temperature range of the water in the container being used for infants in order to avoid the infants from being scalded.

To avoid the aforementioned problems, some cups are designed in the prior art to solve the problem of being scaled and incapable of knowing the water temperature. For example, the Chinese patent application CN201110114488.7 discloses a cup with thermometer, wherein the cup with thermometer includes a cup body and a thermometer, and the thermometer is disposed on the wall of the cup; when drinking, water is poured into the cup, and the temperature of the water in the cup can be seen through the thermometer, thus avoiding the problems of being scalded due to over-high temperature of the water and easy ailing due to over-low temperature of the water. The patent application is aimed to add a thermometer on the inner wall of the present cup to measure the temperature of the water in the cup. Although it somehow solves the problem of measuring the temperature of the water, it has design problem; for example, the difficulty of observing the thermometer via naked eyes since the thermometer is designed inside the cup, and for another example, the problem of attaching and fixing the thermometer on the inner wall as well as the problem of replacing the thermometer when it is not working, and it also affects the design outlook of the entire cup, and the like.

Therefore, it is necessary to further improve the prior art, so that the approximate temperature of water in the cup can be simply visualized only from the outer wall of the cup without adding any element on the inner wall of the container, thus providing beautiful cup in its design.

### SUMMARY

According to the solution of the present invention, an object of the present invention is to solve the problems in the prior art, and provides a temperature indicator which indicates the approximate range of temperature, and visualizes the approximate range of temperature in a container through the temperature indicator.

Another object of the present invention is to provide a container with a container indicator, which indicates the approximate temperature of the liquid in the container, so as to avoid people from being scalded while using the container, and it meanwhile offers a beautiful design within the container.

Therefore, the present invention implements with the following technical solution.

A temperature indicator includes:
a temperature indicator body, wherein the body is provided with temperature induction zones so as to induce different temperature ranges and display differently.

According to one embodiment of the temperature indicator of the present invention, the temperature induction zone is circle or orthogon, or other shape such as rhombus.

According to one embodiment of the temperature indicator of the present invention, the temperature induction zones are provided with thermochromic materials so as to present different colors and/or wordings according to different temperatures.

According to one embodiment of the temperature indicator of the present invention, three temperature induction zones are provided, with induced temperature ranges respectively as follows:
the temperature range induced by the first temperature induction zone is below 16 °C;
the temperature range induced by the second temperature induction zone is between 17 °C and 50 °C; and
the temperature range induced by the third temperature induction zone is between 51 °C and 100 °C.

According to one embodiment of the temperature indicator of the present invention, the colors include red, blue and green. In one embodiment, red indicates high temperature (51 °C to 100 °C), representing that the temperature of the liquid is very high, which shall be drunk with caution; green indicates intermediate temperature (37 °C to 50 °C), representing that the temperature of the liquid is moderate, which is safe to drink; and blue indicates low temperature (below 16 °C), representing that the temperature of the liquid is lower, which is safer to drink. The wordings include "hot", "warm" and "cool".

According to one embodiment of the temperature indicator of the present invention, the temperature indicator body is made of a paper material or a plastic material.

According to one embodiment of the temperature indicator of the present invention, the temperature indicator body is provided with a transparent thin film to protect the temperature indicator.

A container with temperature indication includes a container body, wherein the container body includes an inner layer liner, an outer layer shell and a gap between the inner layer liner and the outer layer shell. The container with temperature indication further includes: a temperature indicator, wherein the temperature indicator comprises a temperature indicator body which is provided with temperature induction zones so as to induce different temperature ranges and display differently.

In one embodiment, the container includes a double-layer cup, a ceramic cup, an infant bottle, a steel cup or other containers needing temperature indication.

According to one embodiment of the container with temperature indication of the present invention, the temperature induction zone is circle or orthogon, or other shape such as rhombus.

According to one embodiment of the container with temperature indication of the present invention, the temperature induction zones are provided with thermochromic materials so as to present different colors according to different temperatures, wherein three temperature induction zones are provided, with induced temperature ranges respectively as follows:
the temperature range induced by the first temperature induction zone is below 16 °C;
the temperature range induced by the second temperature induction zone is between 17 °C and 50 °C; and
the temperature range induced by the third temperature induction zone is between 51 °C and 100 °C.

In one embodiment, red indicates high temperature (51 °C to 100 °C) of the container, representing that the temperature of the liquid is very high, which shall be drunk with caution; green indicates intermediate temperature (37 °C to 50 °C) of the container, representing that the temperature of the liquid is moderate, which is safe to drink; and blue indicates low temperature (below 16 °C) of the container, representing that the temperature of the liquid is lower, which is safer to drink.

According to the present invention, temperature induction zones are disposed on a matrix made of paper or plastics, and the present thermochromic materials are disposed on the temperature induction zones to produce the temperature indicator, and the temperature induction zones present different colors such as red, blue or green according to the different temperature ranges induced by the temperature induction zones, so as to remind people of the approximate temperature range of the liquid.

The container with temperature indication according to the present invention, for example, a double-layer vacuum cup, a ceramic cup or an infant bottle, refers to adhering the temperature indicator of the present invention on the container, so that people will be able to know the approximate temperature range of the liquid in the container through the change of colors via different colors display being visualized by naked eyes. The container is convenient and applicable, and is beautiful.

### BRIEF DESCRIPTION OF THE DRAWINGS

To explain the present invention clearly, the present invention will be described in details hereinafter with reference to the drawings, wherein:
Fig. 1 is block diagram of a temperature indicator according to the invention;
Fig. 2 is a block diagram after color development of the temperature indicator according to the invention; and
Fig. 3 is a block diagram of one embodiment of a container with temperature indication according to the invention.

### DETAILED DESCRIPTION

The present invention will be further described in details hereinafter with reference to the specific embodiments. There schematic embodiments and explanation of the present invention here are only for explanation of the present invention, but are not intended to limit the present invention.

The term "high temperature" herein refers to 51 °C to 100 °C; the term "intermediate temperate" herein refers to 17 °C to 50 °C; and the term "low temperate" herein refers to temperature below 16 °C. However, the conception of the "intermediate temperate" is relative according to different people, but the proper temperature is usually between 35 °C and 39 °C. For example, the optimal temperature for drinking water is about 37 °C. The intermediate temperate herein is defined between 17 °C and 50 °C, representing that water within this temperature range is suitable for drinking.

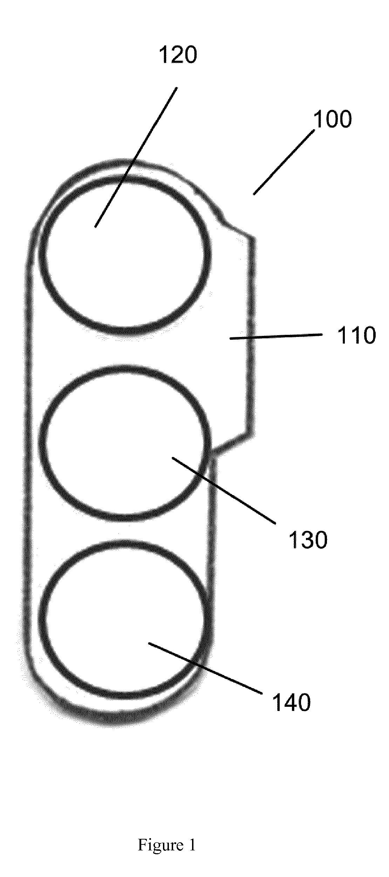

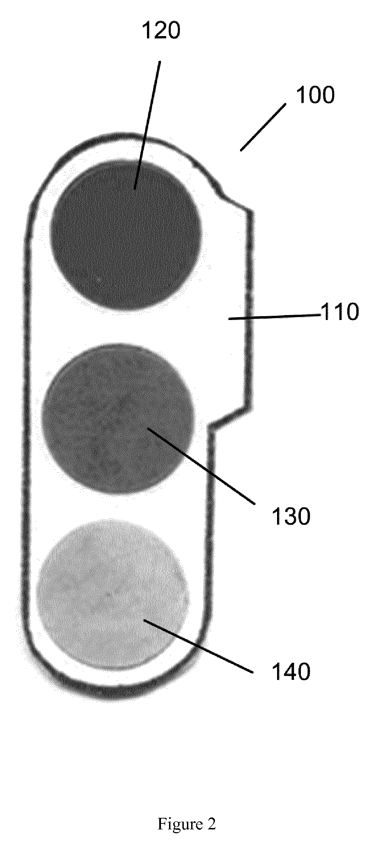

As shown in Fig. 1 and Fig. 2, a temperature indicator of the present invention 100 includes a temperature indicator body 110, which is made of a paper or plastic material, for example, PE, PP or PVC. The temperature indicator body 110 is provided with temperature induction zones so as to induce different temperature ranges and display corresponding temperature.

Three temperature induction zones are provided, which are respectively 120, 130 and 140 and are circle or orthogon or rhombus in shape. Particularly, the temperature induction zones may also be designed in any other shape, which can be designed according to specific needs. The temperature induction zones 120, 130 and 140 are formed by coating thermochromic materials on the temperature indicator body 110, wherein the thermochromic materials are made of electron-transfer organic compound material, which enables electrons to transfer under a specific temperature so as to drive the changes to the molecular structures of organic matters, and thus resulting in color transformation. This thermochromic material not only has vivid color, but also be able to conduct colored-colorless transformation.

To protect the temperature indicator 100, the temperature indicator 100 is coated with a protection layer (not shown in the Figure), for example, a plastic player, so that the temperature indicator is effectively protected.

The temperature indicator 100 may indicate different temperature ranges (usually three temperature ranges). For example, in one embodiment, three temperature induction zones are provided, with induced temperature ranges respectively as follows: the temperature range induced by the first temperature induction zone 140 is below 16 °C; the temperature range induced by the second temperature induction zone 130 is between 17 °C and 50 °C; and the temperature range induced by the third temperature induction zone 120 is between 51 °C and 100 °C. Particularly, additional number of induction zones (for example, four, five or six zones) can be set for acquiring higher accurate temperature range, so as to divide the induced temperature ranges in more details. In one embodiment, the temperature range induced by the second temperature induction zone 130 is between 37 °C and 50 °C. In another embodiment, the colors include red, blue and green. In one embodiment, red indicates high temperature (51 °C to 100 °C), representing that the temperature of the liquid is very high, which shall be drunk with caution; green indicates intermediate temperature (37 °C to 50 °C), representing that the temperature of the liquid is moderate, which is safe to drink; and blue indicates low temperature (below 16 °C), representing that the temperature of the liquid is lower, which is safer to drink.

Particularly, the color as display acts as a reminder; therefore, the color could be selected freely according to different needs; for example, orange can be selected for representing high temperature, blue for representing intermediate temperature and green for low temperature. Other colors may also be selected, which are determined according to the demands.

Further, the temperature indicator 100 may also synchronously display wordings, i.e., displaying wordings simultaneously when displaying colors; for example, displaying "cool" or "warm" or "hot".

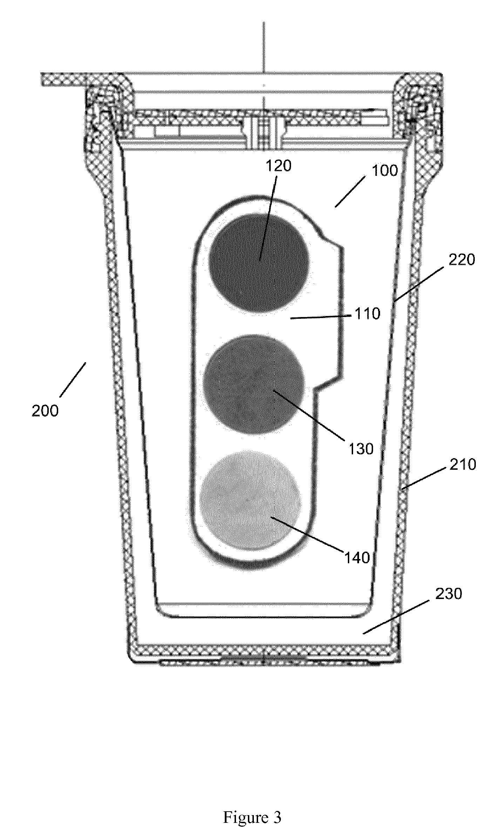

As shown in Fig. 3, the present invention also discloses a container with a temperature indicator, for example, a water cup 200, which includes an outer layer shell 210, an inner layer liner 220 and a gap 300 between the outer layer shell 210 and the inner layer liner 220. The inner layer shell 220 of the cup 200 is provided with the temperature indicator 100 of the present invention, which includes a temperature indicator body 110 that is made of a paper or plastic material, for example, PE, PP or PVC. The temperature indicator body 110 is provided with temperature induction zones so as to induce different temperature ranges and display corresponding temperature. The container includes a vacuum cup, a steel cup, a ceramic cup or an infant bottle, or any other container that is able to carry liquid.

The temperature indicator 100 may indicate different temperature ranges (usually three temperature ranges). For example, in one embodiment, three temperature induction zones are provided, with induced temperature ranges respectively as follows: the temperature range induced by the first temperature induction zone 140 is below 16 °C; the temperature range induced by the second temperature induction zone 130 is between 17 °C and 50 °C; and the temperature range induced by the third temperature induction zone 120 is between 51°C and 100 °C. Particularly, additional number of induction zones (for example, four, five or six zones) can be set for acquiring a higher accurate temperature range, so as to divide the induced temperature ranges in more details.

In another embodiment, the colors include red, blue and green. In one embodiment, red indicates high temperature (51 °C to 100 °C), representing that the temperature of the liquid is very high, which shall be drunk with caution; green indicates intermediate temperature (37 °C to 50 °C), representing that the temperature of the liquid is moderate, which is safe to drink; and blue indicates low temperature (below 16 °C), representing that the temperature of the liquid is lower, which is safer to drink.

Further, the temperature indicator 100 excluding displaying colors, may also offer further alert to people, for example, prompting of specific wordings. In one embodiment, when the temperature range induced by the temperature induction zone 140 of the temperature indicator 100 is below 16 °C, and the temperature induction zone displays blue with wording "cool"; the temperature range induced by the second temperature induction zone 130 of the temperature indicator 100 is 37 °C to 50 °C, and the temperature induction zone displays green with wording "warm"; the temperature range induced by the third temperature induction zone 120 is 51 °C to 100 °C, and the temperature induction zone displays red with wording "hot". The addition of words can be used to remind the user whether the temperature of the liquid is suitable for drinking instantly.

Particularly, the color display acts as reminder; therefore, the color could be selected freely according to different needs; for example, orange can be selected for representing high temperature, blue for representing intermediate temperature and green for low temperature. Other colors may also be selected, which are determined according to the demands.

The present invention has changed the way in the traditional temperature measurement methods, and the present thermochromic materials are coated on the matrix made of paper or plastic to form the temperature induction zone, so as to produce the temperature indicator. The temperature induction zone may present different colors like red, blue or green and wordings according to different temperature ranges induced by the temperature induction zone, so as to remind people of an approximate temperature range of the liquid.

The container with temperature indication according to the present invention, for example, a double-layer vacuum cup, a ceramic cup or an infant bottle, refers to adhering the temperature indicator of the present invention on the container, so that people are able to know the approximate temperature range of the liquid in the container through the change of colors via different color displays visualized by naked. The container is convenient and applicable, and the entire container is beautiful.

The above describes the technical solution provided by embodiments of the present invention in details. Specific examples are used herein to describe the principles and implementations of the embodiments of the present invention, and the above embodiments are only applied to help understand the principles of the embodiments of the present invention; and meanwhile, those having ordinary skills in the art may both change the detailed description and application range according to the present invention. In conclusion, the contents of the description cannot be appreciated as a limitation to the present invention.

## Claims

1. A temperature indicator, **characterized in that**, the temperature indicator comprises:
a temperature indicator body, wherein the body is provided with temperature induction zones so as to induce different temperature ranges and display differently; and
the temperature induction zones are provided with thermochromic materials so as to present different colors and/or wordings according to different temperatures;
wherein, three temperature induction zones are provided, with induced temperature ranges respectively as follows:
the temperature range induced by the first temperature induction zone is below 16 °C;
the temperature range induced by the second temperature induction zone is between 17 °C and 50 °C ; and
the temperature range induced by the third temperature induction zone is between 51 °C and 100 °C .

2. The temperature indicator according to claim 1, **characterized in that** the temperature induction zones are circle or orthogon or rhombus in shape.

3. The temperature indicator according to claim 1, **characterized in that** the colors include red, blue and green, and the wordings include "hot", "warm" and "cool".

4. The temperature indicator according to claim 1, **characterized in that** the temperature indicator body is made of a paper material or a plastic material.

5. The temperature indicator according to claim 1, **characterized in that** the temperature indicator body is provided with a transparent thin film to protect the temperature indicator.

6. A container with temperature indication, comprising a container body, wherein the container body comprises an inner layer liner, an outer layer shell and a gap between the inner layer liner and the outer layer shell, and wherein the container with temperature indication further comprises: a temperature indicator, wherein the temperature indicator comprises a temperature indicator body which is provided with temperature induction zones so as to induce different temperature ranges and display differently; and
the temperature induction zones are provided with thermochromic materials so as to present different colors and/or wordings according to different temperatures, wherein three temperature induction zones are provided, with induced temperature ranges respectively as follows:
the temperature range induced by the first temperature induction zone is below 16 °C;
the temperature range induced by the second temperature induction zone is between 17 °C and 50 °C; and
the temperature range induced by the third temperature induction zone is between 51 °C and 100 °C.

7. The container with temperature indication according to claim 6, **characterized in that** the temperature induction zones are circle or orthogon or rhombus in shape.
